# DEMANDE DE BREVET EUROPEEN

(11) **EP 2 474 900 A1**
(43) Date de publication de la demande: **11.07.2012**
(21) Numéro de dépôt: 12150337.9
(22) Date de dépôt: 05.01.2012
(51) Int. Cl.: G06F 3/048

(54) **Procédé de restitution de données sur un objet tridimensionnel**

(30) Priorité: 06.01.2011 FR 1150098
(71) Demandeur: France Telecom, 75015 Paris (FR)
(72) Inventeur: Gastinger, René, 35000 RENNES (FR)

(57) **Abrégé**

L'invention a trait à un objet tridimensionnel (5) équipé de moyens de restitution aptes à restituer des données organisées sous forme hiérarchique sur au moins deux niveaux de hiérarchie (N0-N1, N1-N2, N2-N3). L'objet comprend un nombre fini d'éléments de restitution (f1-f6) aptes à restituer des données. Le procédé est caractérisé en ce que les éléments de restitution sont regroupés en au moins deux sous-ensembles d'éléments de restitution ((f1,f6,f3,f5),(f1,f2,f3,f4)), associés à des directions de rotation (R1,R2) autour d'axes de rotation distincts passant par l'objet. Le procédé est également caractérisé en ce que l'objet comprend des moyens de sélection d'un élément de restitution choisi parmi les éléments de restitution du premier sous-ensemble et des moyens de restitution aptes à restituer :
- des données d'un premier niveau de hiérarchie (N1, N2) sur le premier sous-ensemble d'éléments de restitution,
- et des données d'un second niveau de hiérarchie (N2, N3) héritant des données associées à l'élément de restitution sélectionné sur le second sous-ensemble d'éléments de restitution.

## Description

### Domaine technique

L'invention se rapporte à un objet tridimensionnel doté de moyens suffisants à la restitution de données.

Cet objet peut être un objet virtuel affiché sur un écran de terminal ou un objet physique doté de ressources physiques et/ou logicielles aptes à restituer des données.

L'invention s'applique tout particulièrement à la restitution de données organisées sous forme hiérarchique. De telles données sont par exemple des données multimédia accompagnant typiquement des programmes audiovisuels. Ces données multimédia sont par exemple des données descriptives, des programmes audiovisuels, ou des données constitutives de guides de programmes, etc.

La restitution concerne indifféremment la restitution sur un écran ou par des haut-parleurs, ou tout autre moyen apte à restituer des données multimédia.

### Etat de la technique

Généralement, les données multimédia, par exemple les données constitutives d'un guide de programmes ou les données de programmes audiovisuels, associées aux données audiovisuelles, sont très volumineuses, à tel point que l'utilisateur souhaitant accéder à de telles données ne peut les visualiser toutes en même temps sur son terminal. Certaines solutions ont donc été proposées pour naviguer efficacement dans de telles données qui sont généralement hiérarchisées.

Par exemple ces données peuvent composer trois niveaux de hiérarchie : au premier niveau de la hiérarchie, le guide de programmes propose à l'utilisateur les programmes télévisuels de toutes les chaînes disponibles pour un créneau horaire. Au second niveau de la hiérarchie se trouvent les données descriptives des chaînes télévisuelles sur l'ensemble de la journée. Au troisième niveau se trouvent les données des programmes télévisuels eux-mêmes.

Par exemple, sur certains terminaux équipés d'un écran tactile, une solution consiste, par glissement sur l'écran, à faire défiler les données multimédia de manière à simuler un écran plus grand, ou une succession d'écrans, donnant ainsi à l'utilisateur une illusion de continuité.

Cependant cette solution reste limitée à une direction de restitution et à un seul niveau hiérarchique, en d'autres termes un seul type de données à la fois : dans l'exemple cité ci-dessus, l'utilisateur n'accède qu'aux données de type guide de programmes ou aux données de description de programmes ; lorsqu'il sélectionne une chaîne dans le guide de programmes, le programme de la chaîne s'affiche sur l'écran et le guide de programmes disparaît.

### L'invention

A cet effet, selon un aspect structurel, l'invention se rapporte à un objet tridimensionnel équipé de moyens de restitution apte à restituer des données organisées sous forme hiérarchique sur au moins deux niveaux de hiérarchie, l'objet comprenant un nombre fini d'éléments de restitution aptes à restituer des données, caractérisé en ce que les éléments de restitution sont regroupés en au moins deux sous-ensembles d'éléments de restitution associés à des directions de rotation autour d'axes de rotation distincts passant par l'objet et en ce que l'objet comprend des moyens de sélection d'un élément de restitution choisi parmi les éléments de restitution du premier sous-ensemble et des moyens de restitution aptes à restituer :
- des données d'un premier niveau de hiérarchie sur le premier sous-ensemble d'éléments de restitution,
- et des données d'un second niveau de hiérarchie héritant des données associées à l'élément de restitution sélectionné sur le second sous-ensemble d'éléments de restitution.

Ainsi, l'invention offre l'avantage à un utilisateur de pouvoir visualiser à la fois deux types de données liées entre elles sur un objet tridimensionnel, par exemple des données de premier niveau de guide de programme et des données de deuxième niveau descriptives des chaînes télévisuelles qui en héritent, les données du premier niveau étant affichées selon des écrans disposés dans une première direction de rotation autour d'un axe passant par l'objet et les données du second niveau étant restituées selon une seconde direction de rotation distincte autour d'un autre axe passant par l'objet.

Le document WO2005/091122 décrit une interface graphique sous forme d'un cube virtuel affichant sur différentes faces des menus organisés de façon hiérarchique. Une première face verticale du cube affiche un menu principal comportant une pluralité d'éléments correspondant à des sous-menus sélectionnables. Sur sélection de l'un de ces éléments, le cube tourne autour de son axe vertical afin de positionner une deuxième face affichant le sous-menu de l'élément sélectionné du menu principal à la place de la première face. Par ailleurs, une rotation du cube autour de son axe horizontal permet de remplacer l'une des faces verticales (celle affichant le menu principal ou celle affichant le sous-menu) par une face affichant un éditeur de SMS. Dans WO2005/091122, une sélection d'un élément d'une face entraîne une rotation autour de l'axe vertical et fait changer de niveau de hiérarchie. Ainsi, une face affiche un ensemble d'éléments d'un même niveau hiérarchique et on change de niveau de hiérarchie en cas de rotation autour de l'axe vertical. Il en résulte que les faces sont très chargées en données car elles contiennent tous les éléments d'un niveau hiérarchique.

Dans l'invention, les données d'un premier niveau de hiérarchie sont restituées sur un premier sous-ensemble de restitution associé à une première direction de rotation, par exemple sur les faces associées à une rotation autour d'un axe vertical dans le cas d'un cube. Les données d'un second niveau de hiérarchie héritant des données associées à un élément de restitution sélectionné dans le premier sous-ensemble sont restituées sur un second sous-ensemble de restitution associé à une deuxième direction de rotation, par exemple les faces associées à une rotation autour d'un axe horizontal. Grâce à cela, on réduit la quantité de données à afficher par face.Selon un premier mode de mise en oeuvre particulier de l'invention, un objet tel que décrit ci-dessus inclut en outre des moyens de détection de l'angle que forme l'un des éléments d'un sous-ensemble avec un plan donné tels que la restitution sur l'élément s'effectue lorsque cet angle dépasse un certain seuil. Ce mode de mise en oeuvre de l'invention permet de pouvoir visualiser les données sur les éléments de restitution l'un après l'autre, au fur et à mesure de leur inclinaison par rapport à deux plans de référence que sont par exemple l'horizontale et la verticale. De cette manière, l'affichage ou le rafraîchissement d'un écran sera réalisé seulement lorsqu'une certaine portion de l'écran sera visible de l'utilisateur, étant entendu qu'il est inutile d'afficher des informations sur l'écran s'il ne peut être visualisé par l'utilisateur.

Selon un deuxième mode de mise en oeuvre particulier de l'invention, qui pourra être mis en oeuvre alternativement ou cumulativement avec le précédent, un objet tel que décrit plus haut inclut en outre des moyens de détection d'une direction de rotation de l'objet dans l'espace tels qu'une direction de restitution d'un sous-ensemble est sélectionnée par la direction dudit mouvement de rotation. Ainsi, l'invention offre l'avantage de pouvoir visualiser les données automatiquement sur les éléments de restitution au fur et à mesure de la rotation du solide dans l'espace, selon la direction de rotation choisie par l'utilisateur de l'objet.

Selon encore un troisième mode de mise en oeuvre particulier de l'invention, qui pourra être mis en oeuvre alternativement ou cumulativement, un objet tel que décrit plus haut inclut en outre des moyens de sélection d'un élément de restitution tels que l'élément de restitution sélectionné comprend une indication sur la direction de rotation associée à la restitution de données héritant des données restituées sur l'élément de restitution. Un tel mode de mise en oeuvre permet d'afficher explicitement des données héritant de l'élément de restitution sélectionné selon une direction particulière. Si l'utilisateur choisit cette direction particulière, en mettant par exemple l'objet en rotation, elle sera utilisée par la suite pour afficher les données héritières.

Selon une variante de ce troisième mode de mise en oeuvre, l'objet comporte en outre des moyens pour sélectionner les prochaines données à restituer en fonction de la direction de rotation. Cette variante permet l'affichage des données héritées de l'élément sélectionné selon un ordre donné, par exemple pour afficher les informations des programmes suivant ou précédent le programme affiché sur la face sélectionnée. Par exemple, lorsque la direction de rotation sélectionnée est orientée dans le sens direct la restitution s'effectue dans le sens chronologique (informations des programmes suivants) alors qu'une rotation de l'objet dans l'autre sens (indirect) permettra d'afficher les données dans un ordre inversement chronologique (informations des programmes précédents).

Selon encore un quatrième mode de mise en oeuvre particulier de l'invention, qui pourra être mis en oeuvre alternativement ou cumulativement, l'objet comprend des moyens de commande pour figer la restitution des données sur au moins un des éléments de restitution. Cette variante de mise en oeuvre de l'invention permet de figer l'affichage pour stabiliser les données lues par l'utilisateur, ce qui évite le défilement intempestif des données lors d'une manipulation, ou la sélection erronée d'un élément de restitution.

Selon encore un cinquième mode de mise en oeuvre particulier de l'invention, qui pourra être mis en oeuvre alternativement ou cumulativement, l'objet comprend des moyens de commande de sélection d'un niveau à restituer. Cette variante de mise en oeuvre de l'invention permet d'accéder directement aux données souhaitées dans la hiérarchie des données, par exemple pour revenir rapidement à la racine de l'arbre des données et restituer immédiatement le menu en s'affranchissant d'un trajet dans les branches de l'arbre.

Selon encore un sixième mode de mise en oeuvre particulier de l'invention, qui pourra être mis en oeuvre alternativement ou cumulativement, l'objet comprend des moyens de restitution aptes à restituer périodiquement des données d'un niveau associé à un sous-ensemble, avec une période égale au nombre d'éléments de restitution nécessaires à la restitution des données associées au sous-ensemble. Cette variante de mise en oeuvre de l'invention permet d'afficher périodiquement les données d'un niveau, par exemple les données des programmes télévisuels, en réalisant un affichage déroulant des informations sur les éléments de restitution.

Selon encore un septième mode de mise en oeuvre particulier de l'invention, qui pourra être mis en oeuvre alternativement ou cumulativement, l'objet comporte des moyens pour identifier l'élément de restitution prédéterminé pour la restitution de la racine de l'arbre. Cette variante permet d'afficher la racine, comportant par exemple le menu d'accueil, sur un élément de restitution prédéterminé.

Selon un aspect fonctionnel, l'invention a pour objet un procédé de restitution adapté à restituer sur un objet tridimensionnel comprenant un nombre fini d'éléments de restitution regroupés en au moins deux sous-ensembles d'éléments de restitution, des données organisées sous forme hiérarchique sur au moins deux niveaux de hiérarchie, caractérisé en ce qu'il comporte les étapes suivantes :
- restitution des données d'un premier niveau de hiérarchie sur le premier sous-ensemble d'éléments de restitution,
- sélection d'un élément de restitution choisi parmi les éléments de restitution du premier sous-ensemble.
- Restitution des données d'un second niveau de hiérarchie héritant des données associées à l'élément de restitution sélectionné sur le second sous-ensemble d'éléments de restitution.

Selon un premier mode de mise en oeuvre particulier du procédé, qui pourra être mis en oeuvre alternativement ou cumulativement, l'étape de sélection du procédé tel que décrit ci-dessus inclut en outre une étape de calcul de l'angle que forme l'un des éléments d'un sous-ensemble avec un plan donné et en ce que les données sont restituées lors de l'étape de restitution lorsque cet angle dépasse un certain seuil.

Selon un deuxième mode de mise en oeuvre particulier du procédé, qui pourra être mis en oeuvre alternativement ou cumulativement, le procédé tel que décrit ci-dessus comporte encore :
- une étape de détection d'une direction de rotation de l'objet dans l'espace,
- une étape d'affectation d'une direction de restitution correspondant à cette rotation à un sous-ensemble.

Selon un troisième mode de mise en oeuvre particulier du procédé, qui pourra être mis en oeuvre alternativement ou cumulativement, le procédé tel que décrit ci-dessus comporte encore :
- une étape d'indication sur au moins un élément de restitution de la direction de rotation associée à la restitution de données,
- une étape d'affectation d'une direction de restitution correspondant à cette rotation à un sous-ensemble de données héritant des données restituées sur l'élément de restitution.

Selon une variante de ce troisième mode de mise en oeuvre de l'invention, le procédé tel que décrit ci-dessus comporte en outre une étape de sélection des prochaines données à restituer en fonction de la direction de rotation.

Selon un autre mode de mise en oeuvre particulier de l'invention, qui pourra être mis en oeuvre alternativement ou cumulativement, l'étape de restitution est suivie d'une étape pour figer des données sur au moins un des éléments restitués.

Selon un autre mode de mise en oeuvre particulier de l'invention, qui pourra être mis en oeuvre alternativement ou cumulativement, l'étape de restitution est suivie :
- d'une étape d'indication d'au moins un niveau à restituer,
- d'une étape de sélection du niveau à restituer,
- d'une étape de restitution des données du niveau sélectionné.

Selon un autre mode de mise en oeuvre particulier de l'invention, qui pourra être mis en oeuvre alternativement ou cumulativement, le procédé tel que décrit ci-dessus comporte en outre une étape de détermination d'une période de données d'un niveau hiérarchique et la restitution des données respecte cette période.

Selon un autre mode de mise en oeuvre particulier de l'invention, qui pourra être mis en oeuvre alternativement ou cumulativement, le procédé tel que décrit ci-dessus comporte en outre une étape de restitution des données de la racine sur l'élément de restitution prédéterminé.

Selon un autre aspect matériel, l'invention concerne également un programme d'ordinateur apte à être mis en oeuvre sur un objet tel que décrit ci-dessus, le programme comprenant des instructions de code qui, lorsque le programme est exécuté par un processeur, réalise les étapes du procédé défini ci-dessus.

L'invention sera mieux comprise à la lecture de la description qui suit, donnée à titre d'exemple et faite en référence aux dessins annexés.

### Les figures:

La figure 1 représente des objets tridimensionnels selon l'invention, illustrés sous forme de polyèdres.
La figure 2 représente un cube, ou polyèdre régulier à six faces, support privilégié selon l'invention, représenté selon sa vue avant en perspective et repéré dans un repère tridimensionnel.
La figure 3 représente un exemple de données hiérarchiques à restituer selon l'invention, plus particulièrement une illustration de données hiérarchiques associées à des programmes audiovisuels.
Les figures 4a et 4b représentent l'affichage des données sur les faces du cube de la figure 2 soumis à une rotation selon l'axe horizontal ou vertical.
La figure 5 est un schéma bloc représentant un système apte à réaliser les étapes d'un procédé de restitution des données sur les faces du cube selon un mode de réalisation de l'invention.
Les figures 6a et 6b représentent un exemple d'affichage automatique des données hiérarchiques de premier et de deuxième niveaux de la figure 3 sur l'objet de la figure 2.
La figure 7 représente un exemple d'affichage des données hiérarchiques de troisième niveau de la figure 3 sur le cube de la figure 2.
La figure 8 représente un exemple d'organigramme pour l'affichage des données sur le cube de la figure 2 selon l'invention.

### Description détaillée d'un exemple de réalisation illustrant l'invention

Un objet tridimensionnel selon l'invention peut être un solide quelconque de l'espace portant des éléments de restitution de données multimédia. Ces données multimédia peuvent être des sons, des images fixes ou animées ou encore du texte. Le solide peut être physique ou virtuel c'est à dire restitué sur un écran d'ordinateur. Lorsque l'objet est physique, les éléments de restitution correspondants peuvent être des haut-parleurs ou des écrans d'affichage de texte ou d'images fixes ou animées. Lorsque l'objet est virtuel, les éléments de restitution sont l'écran de l'ordinateur sur lequel est affiché l'objet et éventuellement des haut-parleurs présents sur l'ordinateur.

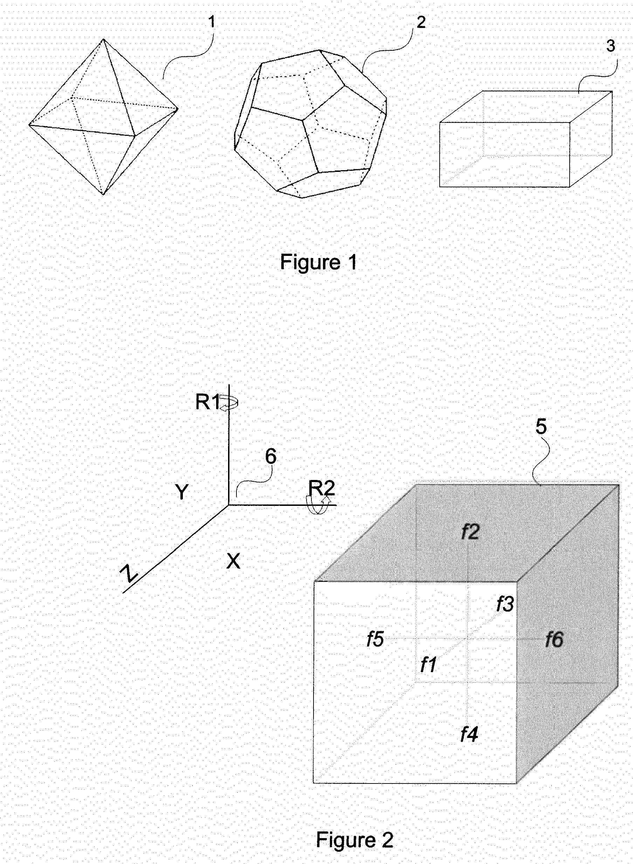

La présente invention sera décrite en référence à un cube, mais elle peut s'appliquer à d'autres solides de l'espace tels des polyèdres plus généraux présentant un nombre fini de faces portant des écrans de visualisation plats ou des volumes sphériques portants des écrans bombés de visualisation, etc. A titre d'illustration la **figure 1** représente un octaèdre régulier (1) à huit faces, un dodécaèdre (2) à douze faces ou un parallélépipède rectangle (3) à six faces.

Le cube (5) est représenté sur la **figure 2**. C'est un polyèdre rectangle régulier possédant six faces carrées identiques numérotées de f1 à f6 relativement à un utilisateur et repéré dans un espace tridimensionnel marqué traditionnellement par les axes X, Y et Z. L'utilisateur du cube, se trouvant par convention positionné devant la face f1, fait tourner le cube devant lui pour faire apparaître de nouvelles données sur l'une des faces. Les deux directions de rotation privilégiées du cube dans l'espace sont la rotation autour d'un axe Y passant par le centre de symétrie du cube, notée R1, que l'on appellera dans la suite rotation verticale et la rotation autour d'un axe X passant par le centre de symétrie du cube, notée R2, que l'on nommera rotation horizontale. Par convention d'orientation usuelle dans un repère tridimensionnel, la rotation R1 représentée sur la figure 2 est une rotation dans le sens indirect et la rotation R2 une rotation dans le sens direct.

D'autres directions de rotation sont naturellement envisageables mais présentent moins d'intérêt pour un utilisateur que les deux rotations mentionnées ci-dessus. Dans notre exemple de réalisation, les rotations intéressantes sont en effet celles dont les axes passent idéalement par le centre de symétrie du cube et qui découvrent de nouvelles faces pour afficher de nouvelles données. Par exemple, une rotation autour de l'axe Z ne découvre pas de nouvelle face pour l'utilisateur et ne présente donc aucun intérêt pour l'affichage de nouvelles données. On notera que pour les autres solides présentés sur la figure 1, et de manière plus générales pour tout objet tridimensionnel, d'autres directions de rotations peuvent être envisagés.

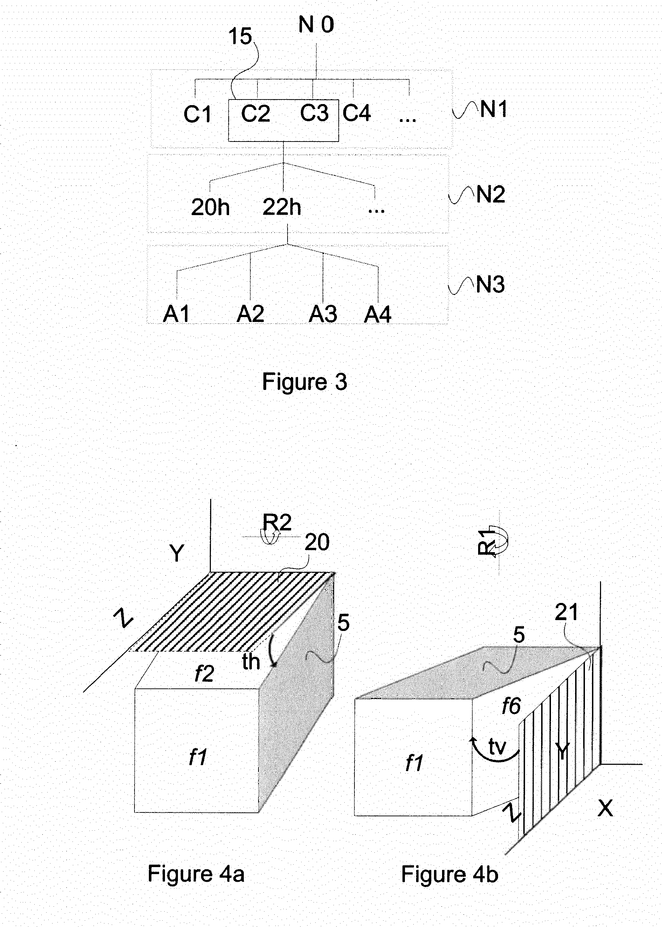

La **figure 3** représente un exemple de données hiérarchiques à afficher sur le cube selon l'invention, plus particulièrement de données hiérarchiques associées à des programmes audiovisuels. Les données sont associées aux noeuds d'un arbre obéissant aux règles classiques d'héritage : l'arbre possède une racine N0, qui est par exemple la référence du guide de programmes et contient les données du menu général qui lui est associé. Selon une variante, cette racine comporte plusieurs éléments (guide de programmes, bouquets, thématique...) et l'utilisateur sélectionne l'un des éléments, par exemple le guide de programmes par touche de l'écran tactile. Les données de niveau 1, N1, qui héritent directement de la racine, notées C1 à C4, correspondent aux données de quatre chaînes audiovisuelles pour un créneau horaire, par exemple la soirée du jour courant. C1 comporte typiquement le logo de la chaîne, une image représentative du film programmé au début du créneau horaire visé, l'heure de début, le titre et le résumé court du film. Ces données étant destinées à un affichage sur les faces de l'objet cube peuvent avoir été regroupées préalablement à l'affichage, afin d'optimiser le nombre de faces utilisées. Ainsi sur la figure 3, les noeuds C2 et C3 de l'arbre sont regroupés (15) pour affichage sur une même face du cube. Les données de niveau 2, N2, qui héritent du niveau N1 représentent sur cet exemple les données descriptives d'une ou deux chaînes télévisuelles pour l'ensemble de la journée. Sur la figure 3, seules les données héritant des noeuds C2 et C3 du niveau supérieur ont été représentées. Le noeud 20h donne des informations succinctes sur les films programmés à 20 heures sur les chaînes C2 et C3 et le noeud 22h le même type de données pour les événements programmés à 22 heures (heure exacte de début, type de film, titre, pictogramme...) pour les chaînes C2 et C3, etc. Par commodité d'affichage, ces éléments peuvent aussi être sélectionnés individuellement par l'utilisateur, par exemple par touche de l'écran tactile. Dans ce cas, seules les données héritant de l'élément sélectionné (par exemple C2) seront concernées par la suite de la description.

De la même manière les données de niveau 3 (N3) notées A1, A2, A3 et A4 portent des données spécifiques relatives à l'événement 22h dont elles héritent : A1 correspond à des données à afficher permettant de commander un enregistrement, A2 à des données à afficher permettant de rentrer un commentaire sur le film, A3 à des données à afficher permettant de déclencher un partage de l'information sur une messagerie, A4 à des données plus détaillées sur le film (résumé long, acteurs, réalisateur, récompenses...).

Ces données vont être affichées sur le cube de la figure 2 selon un procédé qui va maintenant être décrit à l'aide des figures 4, 5 et 6.

En référence aux **figures 4a et 4b**, de nouvelles données sont affichées sur l'une des faces du cube seulement lorsque l'utilisateur, qui se trouve devant le cube et le fait tourner selon l'une des directions privilégiées R1 ou R2, peut visualiser correctement cette face, c'est-à-dire lorsqu'elle n'est pas cachée par l'objet lui-même qui viendrait s'interposer entre le regard de l'utilisateur et la face à afficher. On peut considérer qu'une visualisation correcte correspond à un certain angle d'inclinaison de la face considérée par rapport à un plan de référence horizontal ou vertical.

Ainsi sur la figure 4a, l'utilisateur fait subir au cube un mouvement de rotation de type R2 horizontal qui tend à découvrir la face f2 supérieure du cube. Un angle th mesure l'inclinaison entre le plan formé par la face supérieure f2 du cube et un plan imaginaire horizontal (20) portant les axes X et Z du repère. Dès que cet angle dépasse une certaine valeur seuil STH, par exemple 15°, on peut considérer que la rotation est suffisante et les données sont affichées.

De même sur la figure 4b, l'utilisateur fait subir au cube un mouvement de rotation de type R1 vertical visant à découvrir la face f6 droite du cube. L'angle tv mesure l'angle d'inclinaison entre le plan formé par la face droite f6 du cube et un plan imaginaire vertical (21) portant les axes Y et Z du repère. Dès que cet angle dépasse une certaine valeur, STV, par exemple 15°, on peut considérer que la rotation est suffisante et les données sont affichées.

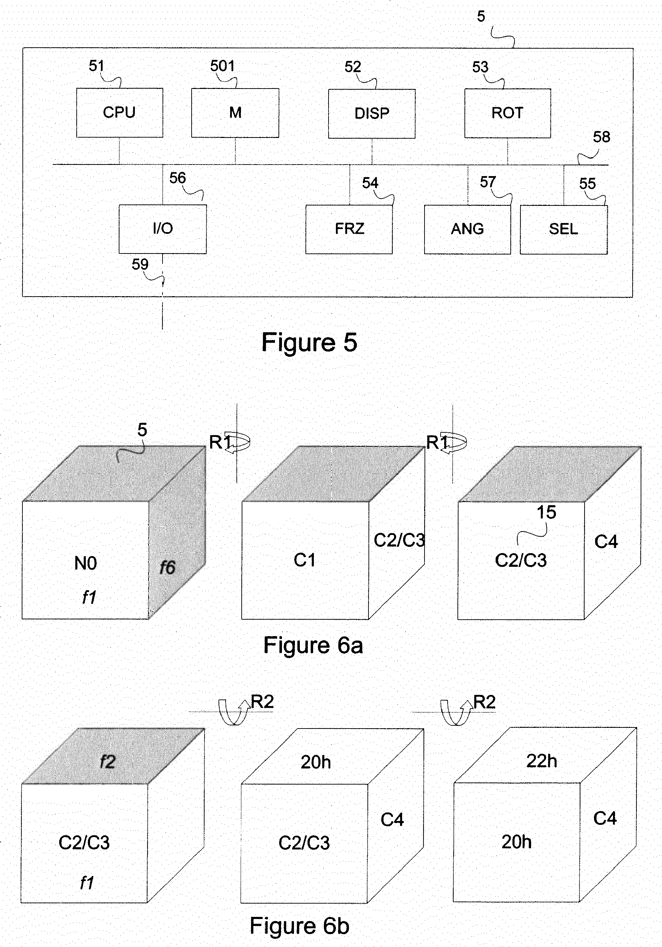

La **figure 5** représente de façon schématique l'architecture du cube (5) de la figure 2. Le cube (5) comporte un processeur 51 (CPU) destiné à exécuter les différentes étapes du procédé décrit par la suite, relié à une mémoire 501 (M) dans laquelle sont mémorisés au moins un programme logiciel de restitution des données sur le cube (dans une partie permanente - ROM) de la mémoire et des données hiérarchiques à afficher sur le cube, des moyens d'affichage 52 (DISP), des moyens de détection 53 d'une direction de rotation (ROT), des moyens 54 de figer l'affichage (FRZ), des moyens de sélection 55 d'un élément pour l'affichage (SEL), des moyens de calcul des angles 57 que forment les éléments de restitution avec un plan horizontal ou vertical (ANG), et des moyens d'entrée-sortie 56 aptes à communiquer avec l'extérieur par une interface 59 (I/O).

Les moyens 55 de détection de la direction de rotation peuvent être par exemple un gyroscope et les moyens 57 de calcul des angles un inclinomètre.

Tous ces éléments sont reliés entre eux par un système de bus 58. L'interface 59 permet notamment au cube de recevoir les données hiérarchiques à afficher, par exemple en provenance d'un téléviseur ou d'un décodeur numérique. Cette interface peut être par exemple une interface sans fil de type Wifi.

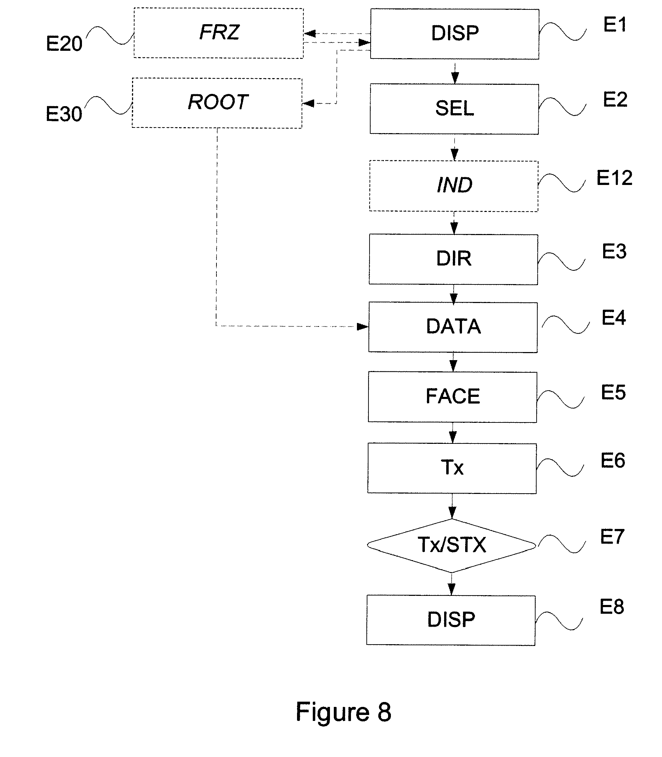

En référence aux **figures 6a, 6b** **et** **8**, on décrit maintenant le procédé qui permet l'affichage automatique des données de premier et de second niveau (N1 et N2) de la figure 3 sur le cube.

La **figure 6a** illustre l'affichage des données du niveau N1. Lors d'une première étape E1 après la mise sous tension du cube, le processeur commande l'affichage de la racine de l'arbre NO sur la face f1 du cube qui se trouve en face de l'utilisateur. Selon un autre mode de réalisation, la racine de l'arbre s'affiche sur une face du cube prédéterminée et l'utilisateur positionne cette face devant lui. Cette face devient alors, par convention, la face f1. Cette racine, notée N0 en référence à la figure 3, affiche le menu d'un guide de programmes. Cette face est sélectionnée par défaut (puisqu'il s'agit de la première face affichée) au cours de l'étape **E2**. Dans cet exemple de réalisation, l'utilisateur met alors le cube en rotation selon la direction R1 (rotation verticale dans le sens indirect). Au cours d'une seconde étape **E3**, le cube 5 détecte grâce au moyen (ROT) de détection de direction de rotation 53 une rotation du cube selon la direction R1. En fonction de cette direction de rotation, le programme détermine alors, au cours d'une étape **E4**, quelles sont les prochaines données à afficher sur le cube. Les prochaines données à afficher sont déterminées en fonction de la hiérarchie des données et de leur ordre : ainsi, conformément à la figure 3, l'élément courant affiché étant la racine N0, les prochaines données à afficher sont des héritières de N0 les plus à gauche, puisque dans cet exemple on a choisi de ranger les données d'un noeud de la gauche vers la droite, c'est-à-dire les données de C1. En fonction de cette direction de rotation également, le dispositif utilise au cours d'une étape **E5** le moyen (SEL) de sélection 55 de la face du cube à afficher pour déterminer l'une parmi six faces du cube pour afficher les données suivantes. Cette face est, dans cet exemple, comme représenté en figure 6a, la face suivante selon la direction de rotation, c'est-à-dire la face f6. Puis au cours de l'étape suivante **E6**, le moyen 57 de détermination de l'angle calcule l'angle tv que forme la face f6 avec un plan vertical (puisque l'étape E3 a détecté une direction de rotation verticale indirecte). Au cours de l'étape **E7**, l'angle d'affichage th ainsi déterminé est comparé à une valeur seuil STV mémorisée par le procédé dans la mémoire 501. Si l'angle tv est supérieur à la valeur seuil STV, les données suivantes sont affichées lors d'une étape **E8** sur la face déterminée à l'étape E5.

Si l'utilisateur continue à faire tourner le cube dans la même direction, comme schématisé sur la figure 6a à droite, les étapes E2 à E8 de la figure 8 décrites précédemment sont de nouveau exécutées et l'affichage des données C2/C3 est réalisé sur une nouvelle face du cube.

Ainsi on réalise un affichage progressif des données héritant de la racine sur les faces f1, f6, f3, f5. Lors de l'affichage de la première face, les données du noeud C1 sont affichées, puis lors de l'affichage d'une seconde face les données des noeuds C2/C3 et ainsi de suite jusqu'à ce que toutes les données de ce niveau aient été affichées dans l'ordre. Les opérations suivantes sont alors possibles :
- Si l'utilisateur continue à faire tourner le cube selon cette direction dans ce sens, le microprocesseur ordonne l'affichage des données de nouveau sur les faces f1, f6, f3, f5, de manière périodique (C1, C2/C3, C4, C1, C2/C3, C4,C1...). Dans cet exemple la période d'affichage est donc de 3.
- Si l'utilisateur fait tourner le cube selon le même axe mais en inversant le sens de rotation, les données s'affichent dans l'ordre inverse sur les faces du cube f1, f5, f3, f6 de manière périodique avec la même période.

En référence à la **figure 6b**, l'utilisateur change de direction de rotation pour choisir la direction R2 horizontale après avoir sélectionné les données C2/C3 au cours d'une nouvelle étape E2 (soit automatiquement parce que la face portant les données C2/C3 se trouve devant lui, soit manuellement en cliquant dessus par exemple). Cette action de sélection d'une face par l'utilisateur déclenche de nouveau les étapes E3 à E8 avec une détection de la direction R2 (rotation horizontale dans le sens direct) au cours de l'étape E3. Les données sélectionnées par l'étape E4 pour le prochain affichage sont les données héritant de C2/C3, la face du cube sélectionnée à l'étape E5 pour le prochain affichage est la face f2, et l'étape E6 calcule un angle th qui est comparé à l'étape E7 avec le seuil STH. Lorsque l'angle th dépasse le seuil STH, l'objet affiche les données du noeud 20h. Ainsi s'afficheront successivement, de manière périodique, si l'utilisateur continue à faire tourner le cube dans cette direction, sur les faces f1, f2, f3, f4 du cube, les données associées au noeud 20h, puis celles associées au noeud 22h, etc.

Selon une variante, au cours de l'étape **E20** représentée en pointillés, l'utilisateur peut, après une étape d'affichage (E1 ou E8), figer l'affichage des données sur l'une ou plusieurs faces du cube. Il procèdera par exemple à une pression sur l'un des sommets du cube, ou sur une région tactile de l'une des faces, ou pourra utiliser tout autre moyen simple mis à sa disposition.

Selon une autre variante, au cours de l'étape **E30** représentée en pointillés, l'utilisateur peut solliciter l'affichage direct d'un niveau quelconque de la hiérarchie. En particulier, il peut déclencher l'affichage de la racine N0 qui comporte les données du menu. Il procèdera par exemple à une pression sur l'un des sommets du cube, ou sur une région tactile de l'une des faces, ou pourra utiliser tout autre moyen simple mis à sa disposition.

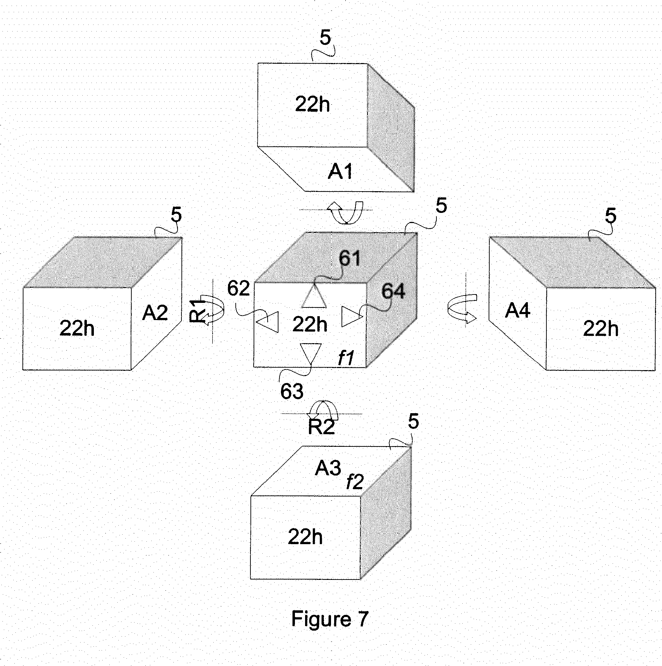

En référence à la **figure 7** et à l'organigramme de la **figure 8**, on décrit maintenant le procédé qui va permettre l'affichage non automatique des données de niveau 3 de la figure 3 sur le cube. On suppose que cette séquence d'étapes fait suite à celle associée à la figure 6 décrite ci-dessus et que les dernières données affichées à l'étape E8 sont par conséquent celles du noeud 22h. Selon cette variante, l'utilisateur sélectionne au cours d'une étape E2 l'évènement 22h (soit automatiquement parce que la face se trouve devant lui, soit manuellement en cliquant dessus par exemple). Cette sélection déclenche sur la face sélectionnée, lors d'une étape **E12**, l'affichage d'indicateurs d'aide à la navigation schématisés par les flèches 61 à 64 de la figure 7. Chacune des flèches 61 à 64 est accompagnée d'une proposition d'action pour l'utilisateur, associée à l'un des noeuds de l'arbre de niveau N3, A1... A4 sur la figure 2. Par exemple le microprocesseur affiche respectivement les indications Enregistrer, Commenter, Partager et Détails à côté (ou à la place) des flèches 61,62,63 et 64. L'utilisateur sélectionne alors une direction de rotation parmi celles qui lui sont proposées par les flèches. Les étapes E3 à E8 de la figure 8 sont alors décrites de nouveau par le procédé en choisissant à l'étape E4 les données correctes à afficher en fonction de la direction choisie par l'utilisateur : par exemple si l'utilisateur choisit de faire tourner l'objet dans la direction de la flèche 63, cette action déclenche, comme représenté en partie basse de la figure 7, la détection d'une direction R2 de rotation horizontale dans le sens direct au cours de l'étape E3. Les données sélectionnées par l'étape E4 pour le prochain affichage sont les données héritant de la face 22h à la position 3 dans l'arbre des données, c'est-à-dire l'action A3 (Partager). La face du cube sélectionnée à l'étape E5 pour le prochain affichage est la face f2 et on calcule lors de l'étape E6 un angle th qui est comparé à l'étape E7 avec le seuil STH. Lorsque l'angle th dépasse le seuil STH, l'objet affiche les données associées à l'action A3.

## Revendications

1. Objet tridimensionnel (5) équipé de moyens de restitution apte à restituer des données organisées sous forme hiérarchique sur au moins deux niveaux de hiérarchie (N0-N1, N1-N2, N2-N3), l'objet comprenant un nombre fini d'éléments de restitution (f1-f6) aptes à restituer des données, **caractérisé en ce que** les éléments de restitution sont regroupés en au moins deux sous-ensembles d'éléments de restitution ((f1,f6,f3,f5),(f1,f2,f3,f4)) associés à des directions de rotation (R1,R2) autour d'axes de rotation distincts passant par l'objet et **en ce que** l'objet comprend des moyens de sélection d'un élément de restitution choisi parmi les éléments de restitution du premier sous-ensemble et des moyens de restitution aptes à restituer :
- des données d'un premier niveau de hiérarchie (N1, N2) sur le premier sous-ensemble d'éléments de restitution,
- et des données d'un second niveau de hiérarchie (N2, N3) héritant des données associées à l'élément de restitution sélectionné sur le second sous-ensemble d'éléments de restitution.

2. Objet selon la revendication 1 **caractérisé en ce qu'**il comporte des moyens de détection de l'angle (57) (th, tv) que forme l'un des éléments d'un sous-ensemble avec un plan donné (20, 21) et **en ce que** la restitution sur l'élément s'effectue lorsque cet angle dépasse un certain seuil (STH, STV).

3. Objet selon la revendication 1 **caractérisé en ce qu'**il comporte des moyens de détection d'une direction de rotation (53) de l'objet dans l'espace (R1, R2) et **en ce qu'**une direction de restitution d'un sous-ensemble est sélectionnée par la direction dudit mouvement de rotation.

4. Objet selon la revendication 1 **caractérisé en ce qu'**il comprend des moyens de sélection d'un élément de restitution (55) et **en ce que** l'élément de restitution sélectionné comprend une indication (61,62,63,64) sur la direction de rotation associée à la restitution de données héritant des données restituées sur l'élément de restitution.

5. Objet selon la revendication 3 ou 4 **caractérisé en ce qu'**il comporte des moyens pour sélectionner les prochaines données à restituer lors de la restitution en fonction de la direction de rotation.

6. Objet selon la revendication 1, **caractérisé en ce qu'**il comprend des moyens de commande pour figer (54) la restitution des données sur au moins un des éléments de restitution.

7. Objet selon la revendication 1 **caractérisé en ce qu'**il comporte des moyens de commande de sélection d'un niveau à restituer.

8. Objet selon la revendication 1 **caractérisé en ce que** les moyens de restitution sont aptes à restituer périodiquement des données d'un niveau (N0, N1, N2, N3) associé à un sous-ensemble, avec une période égale au nombre d'éléments de restitution nécessaires à la restitution des données associées au sous-ensemble.

9. Objet selon la revendication 1 **caractérisé en ce qu'**il comporte des moyens pour identifier l'élément de restitution prédéterminé pour la restitution de la racine (N0) de l'arbre.

10. Procédé de restitution adapté à restituer sur un objet tridimensionnel (5) comprenant un nombre fini d'éléments de restitution (f1-f6) regroupés en au moins deux sous-ensembles d'éléments de restitution ((f1,f6,f3,f5),(f1,f2,f3,f4)), des données organisées sous forme hiérarchique sur au moins deux niveaux de hiérarchie (N0-N1, N1-N2, N2-N3), **caractérisé en ce qu'**il comporte les étapes suivantes :
- restitution des données d'un premier niveau de hiérarchie sur le premier sous-ensemble d'éléments de restitution (E1),
- sélection d'un élément de restitution (E2) choisi parmi les éléments de restitution du premier sous-ensemble,
- restitution (E8) des données d'un second niveau de hiérarchie héritant des données associées à l'élément de restitution sélectionné sur le second sous-ensemble d'éléments de restitution.

11. Procédé selon la revendication 10 **caractérisé en ce que** l'étape de sélection (E2) est suivie d'une étape de calcul (E6) de l'angle (Tx) que forme l'un des éléments d'un sous-ensemble avec un plan donné (20,21) et **en ce que** les données sont restituées lors de l'étape de restitution (E8) lorsque cet angle dépasse un certain seuil (STX, E7).

12. Procédé selon la revendication 10 comportant en outre
- une étape de détection d'une direction de rotation de l'objet dans l'espace (E3),
- une étape d'affectation d'une direction de restitution correspondant à cette rotation à un sous-ensemble (E5).

13. Procédé selon la revendication 10 comportant en outre :
- une étape d'indication sur au moins un élément de restitution (61,62,63,64) de la direction de rotation associée à la restitution de données (E12),
- une étape d'affectation d'une direction de restitution (E3) correspondant à cette rotation à un sous-ensemble de données héritant des données restituées sur l'élément de restitution.

14. Procédé selon la revendication 12 ou 13 **caractérisé en ce qu'**il comporte une étape de sélection des prochaines données à restituer (E4) en fonction de la direction de rotation.

15. Procédé selon la revendication 10 **caractérisé en ce qu'**une restitution (E1, E8) est suivie d'une étape (E20) pour figer des données sur au moins un des éléments restitués.

16. Procédé selon la revendication 10 **caractérisé en ce qu'**une restitution (E1, E8) est suivie :
- d'une étape d'indication d'au moins un niveau à restituer (E30),
- d'une étape de sélection du niveau à restituer,
- d'une étape de restitution des données du niveau sélectionné (E4).

17. Procédé selon la revendication 10 **caractérisé en ce qu'**il comporte une étape de détermination d'une période de données d'un niveau hiérarchique et **en ce que** la restitution des données respecte cette période.

18. Procédé selon la revendication 10 comportant une étape de restitution des données de la racine (N0) sur un élément de restitution prédéterminé.

19. Programme d'ordinateur apte à être mis en oeuvre sur un objet tel que défini dans la revendication 1, le programme comprenant des instructions de code qui, lorsque le programme est exécuté par un processeur, réalise les étapes du procédé défini selon l'une des revendications 10 à 18.
